# EUROPÄISCHE PATENTANMELDUNG

(11) **EP 3 025 941 A1**
(43) Veröffentlichungstag der Anmeldung: **01.06.2016**
(21) Anmeldenummer: 15194952.6
(22) Anmeldetag: 17.11.2015
(51) Int. Cl.: B62D 53/06, B62D 53/04, B60P 3/40

(54) **SATTELFAHRZEUGKOMBINATION**

(30) Priorität: 17.11.2014 DE 202014105502 U
(71) Anmelder: Faymonville Distribution AG, 9990 Welswampach (LU)
(72) Erfinder: FAYMONVILLE, Alain, 9990 Weisampach (LU)
(74) Vertreter: Meinke, Dabringhaus und Partner GbR

(57) **Zusammenfassung**

Sattelfahrzeugkombination mit mehreren Modulen, bei der wenigstens drei Module (2,8,9) auseinanderziehbar und wenigstens teilweise aneinanderschiebbar sind.

## Beschreibung

Die Erfindung betrifft eine Sattelfahrzeugkombination.

Derartige Fahrzeugkombinationen werden für den Transport schwerer, insbesondere aber auch langer Güter benötigt. Während sie im beladenen Zustand ganz oder teilweise auseinander gezogen werden, um den benötigten Laderaum anzubieten, sollen sie bei Leerfahrten möglichst kurz sein. Dies liegt unter anderem darin begründet, dass längere oder besonders lange Fahrzeuge bzw. Fahrzeugkombinationen häufig ein Begleitfahrzeug benötigen, das den entgegenkommenden oder nachfolgenden Verkehr vor besonderen Verkehrsgefahren warnt. Sofern das Fahrzeug bei eine Leerfahrt nicht verkürzbar ist, ergeben sich hierdurch unnötige Begleitservice-Kosten.

Hier setzt die vorliegende Erfindung an und sieht eine Sattelfahrzeugkombination vor, bei der wenigstens drei Module auseinanderziehbar und wenigstens teilweise aneinanderschiebbar sind. Besonders vorteilhaft sind sämtliche Module komplett aneinanderschiebbar.

Hierzu ist vorgesehen, dass wenigstens zwei rohr- oder kastenförmige Zentralträger des zweiten oder des dritten Moduls ganz oder teilweise in hierzu korrespondierende Zentralträger des ersten und zweiten Moduls einschiebbar sind.

Vorteilhaft weist zunächst das erste, vordere Modul einen als Rohr oder Kasten ausgebildeten Zentralträger auf.

In weiterer Ausgestaltung weist das zweite, mittlere Modul einen in Fahrtrichtung gesehen nach vorn verlängerten rohr- oder kastenförmigen Zentralträger auf, der in den Zentralträger des ersten Moduls ganz oder teilweise eingeschoben und hiermit verriegelt werden kann.

Schließlich ist vorgesehen, dass das dritte hintere Modul eine in Fahrtrichtung gesehen vorn fest angeschweißte Stange, Röhre oder einen fest angeformten Kasten aufweist, der/die in die rohr- oder kastenförmigen Zentralträger des ersten Moduls und des zweiten Moduls ganz oder teilweise eingeschoben und hiermit verriegelt werden kann.

Bei derartigen Ausgestaltungen können sämtliche Module komplett aneinander geschoben werden, insbesondere wenn das zweite Modul direkt an das erste Modul und das dritte Modul direkt an das zweite Modul geschoben wird. Dies gelingt insbesondere dadurch, dass die an das dritte Modul vorn angeschweißte Stange, Röhre oder der dort angeformte Kasten durch die entsprechend hohl ausgebildete Röhre oder einen entsprechend hohl ausgeformten Kasten des zweiten Moduls hindurch bis in das ersten Modul eingeschoben werden kann.

Aufgrund straßenverkehrsrechtlicher Vorschriften, insbesondere im Ausland, ist vorgesehen, dass jedes Modul einen internen Radstand von wenigstens 60" = 1.524 mm und drei Achsen aufweist, wobei die Gesamtzuglänge inklusive Zugfahrzeug maximal 1.080" = 27.432 mm beträgt. Der Radstand zwischen den einzelnen Modulen in teilweise ausgezogenem und verriegeltem Zustand beträgt jeweils 192" = 4.876 mm. Die Module können maximal bis zur Länge ihrer rohr- oder kastenförmigen Längsträger ausgezogen werden.

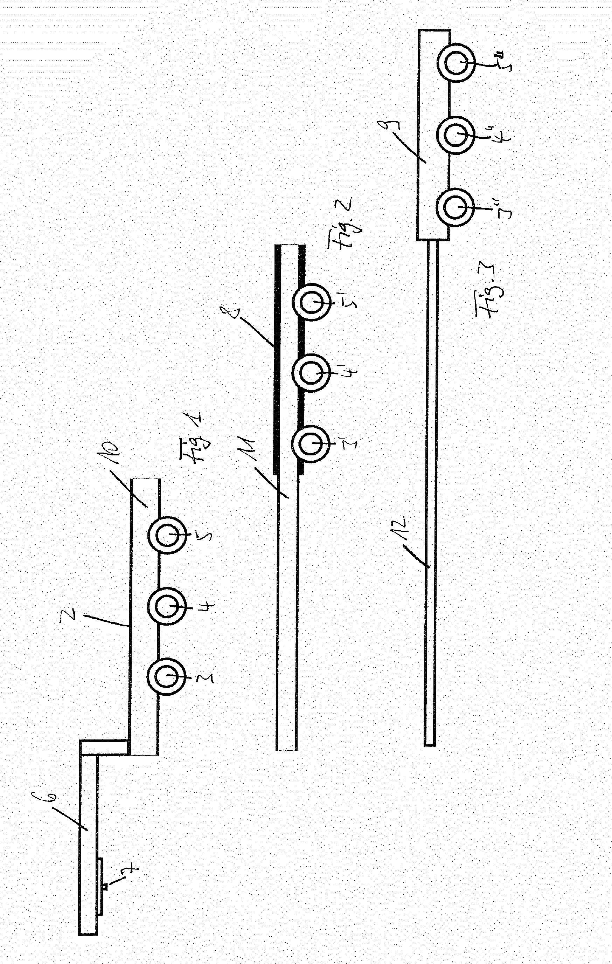

Die Erfindung ist nachstehend anhand der Zeichnung beispielhaft näher erläutert. Diese zeigt in
- Fig. 1: ein erstes Modul in schematischer Seitenansicht,
- Fig. 2: ein zweites Modul in schematischer Seitenansicht,
- Fig. 3: ein drittes Modul in schematischer Seitenansicht,
- Fig. 4: die Module gemäß Fig. 1, 2 und 3 im ganz zusammengeschobenen Zustand,

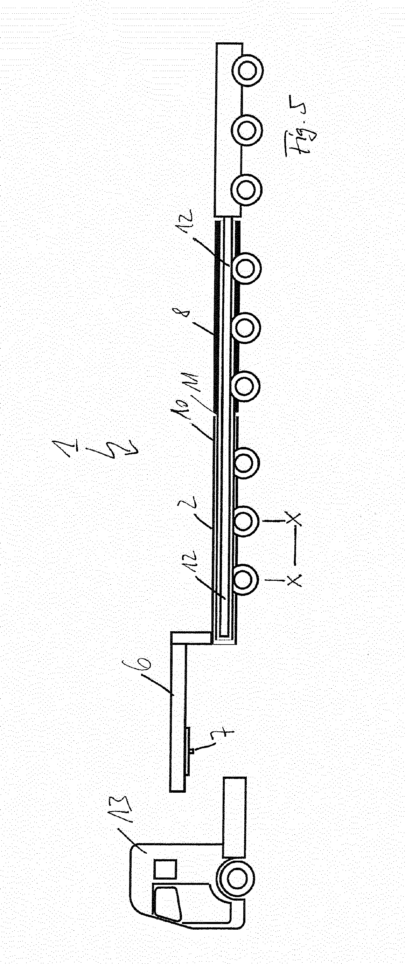

- Fig. 5: eine Darstellung gemäß Fig. 4 mit angedeutetem Zugfahrzeug,
- Fig. 6: die Module gemäß Fig. 1, 2 und 3 in teilweise auseinander gezogenem Zustand,
- Fig. 7: die Module 2, 8 und 9 gemäß Fig. 6 mit angedeutetem Zugfahrzeug,
- Fig. 8: die Module 2, 8 und 9 in ganz ausgezogenem Zustand sowie in
- Fig. 9: die Module 2, 8 und 9 gemäß Fig. 8 mit angedeutetem Zugfahrzeug.

Eine insgesamt als Sattelfahrzeugkombination 1 bezeichnete Fahrzeugkombination weist ein erstes Modul 2 mit drei Achsen 3, 4, 5 sowie optional einem Schwanenhals 6 mit einem Lagerzapfen 7 auf. Ein zweites Modul 8, ebenfalls mit drei Achsen 3', 4', 5' und ein drittes Modul 9, ebenfalls mit drei Achsen 3", 4", 5" folgen. Das erste, vordere Modul 2 weist einen als Rohr oder Kasten ausgebildeten Zentralträger 10 auf. Das zweite Modul 8 weist ebenfalls einen als Rohr oder Kasten ausgebildeten verlängerten Zentralträger 11 auf, der querschnittlich gegenüber dem Zentralträger 10 in der Weise umfangsvermindert ist, dass er teleskopartig in diesen Träger 10 eingeschoben werden kann, d.h. die Außenmaße des Trägers 11 entsprechen den Innenmaßen des Trägers 10.

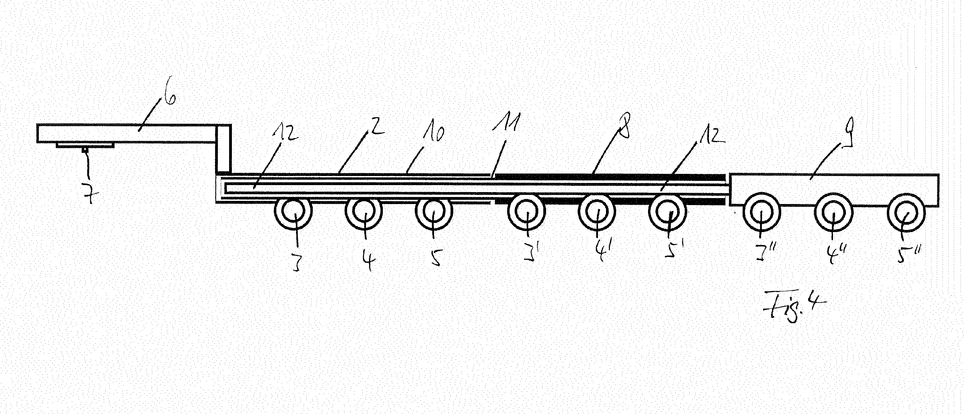

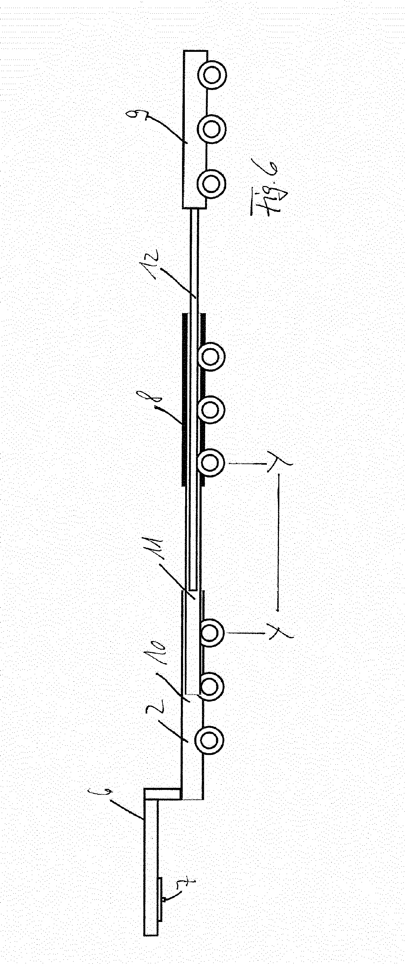

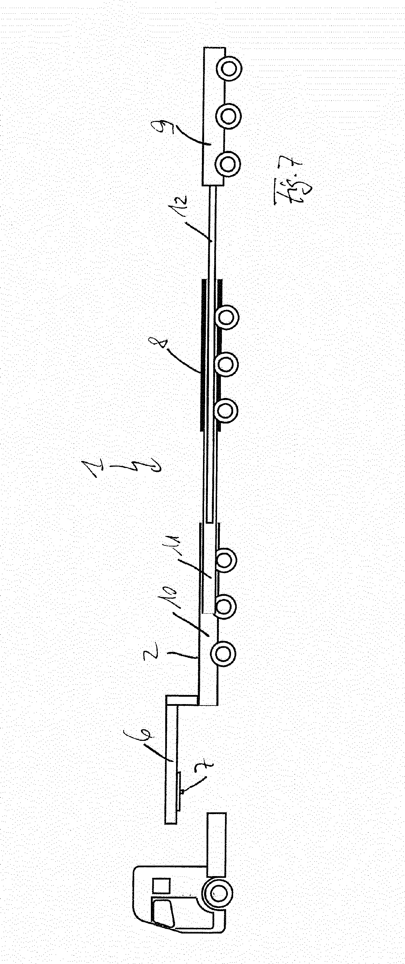

Der Zentralträger 11 ist nach vorn in Form einer fest angeweißten Röhre oder eines fest angeformten Kastens verlängert, so dass er in den Zentralträger 10 des ersten Moduls eingeschoben und hiermit verriegelt werden kann, wie beispielsweise aus Fig. 4 hervorgeht. Dort ist er ganz in das erste Modul eingeschoben, während er in Fig. 6 und 7 nur teilweise eingeschoben ist.

Schließlich weist das dritte Modul 9 ebenfalls eine in Fahrtrichtung gesehen vorn fest angeschweißte Röhre oder einen fest angeformten Kasten 12 auf. Diese Röhre bzw. dieser Kasten 12 ist gegenüber der Röhre/dem Kasten 11 des zweiten Moduls 8 in der Weise umfangsvermindert, dass es ebenfalls teleskopartig in diese(n) hineingeschoben und aus diesem/r herausgezogen werden kann.

Fig. 4 verdeutlicht auch hier den ganz eingeschobenen Zustand, in dem der Kasten/die Röhre 12 des Moduls 9 durch den Kasten bzw. die Röhre 11 des zweiten Moduls 8 ganz in das erste Modul 2 hineingeschoben ist.

Fig. 6 und 7 zeigen den teilweise eingeschobenen Zustand.

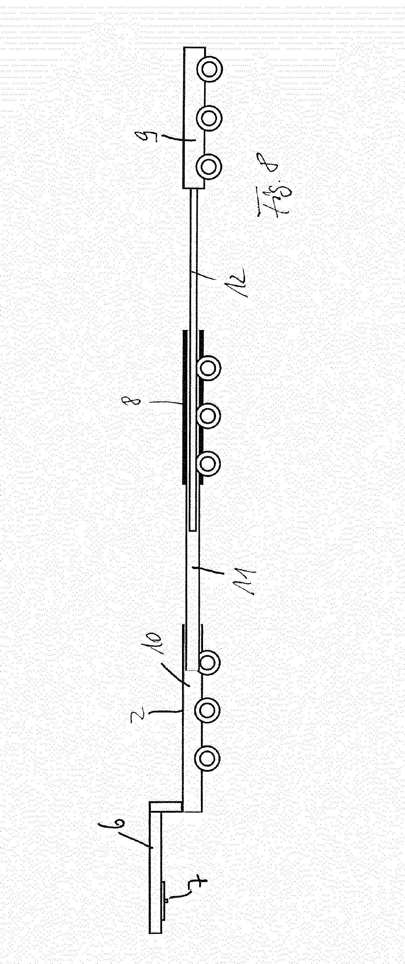

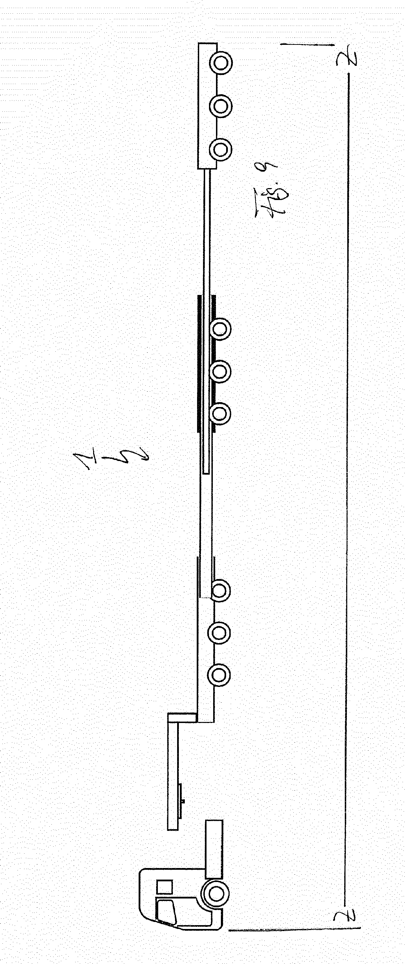

Fig. 8 und 9 zeigen hingegen die Sattelfahrzeugkombination 1 in ganz auseinander gezogenem Zustand in Endverriegelungsstellung, d.h. in der Transportstellung für besonders lange Güter. Der Radstand X-X zwischen den einzelnen Achsen 3, 3', 4, 4', 5, 5' beträgt jeweils 60" = 1.524 mm. Der Radstand Y-Y zwischen den einzelnen Modulen in teilweise ausgezogenem und verriegeltem Zustand beträgt jeweils 192" = 4.876 mm. Die Gesamtzuglänge Z-Z inklusive Zugfahrzeug liegt bei 1080" = 27.432 mm.

Natürlich ist die Erfindung nicht auf die dargestellten Ausführungsbeispiele beschränkt. Weitere Ausgestaltungen sind möglich, ohne den Grundgedanken zu verlassen.

### Bezugszeichenliste:

- 1: Sattelfahrzeugkombination
- 2, 8, 9: Modul
- 3, 3', 3": Achse
- 4, 4', 4": Achse
- 5, 5', 5": Achse
- 6: Schwanenhals
- 7: Lagerzapfen
- 10, 11, 12: Zentralträger
- 12: Kasten

## Patentansprüche

1. Sattelfahrzeugkombination mit mehreren Modulen,
**dadurch gekennzeichnet,**
**dass** wenigstens drei Module (2,8,9) auseinanderziehbar und wenigstens teilweise aneinanderschiebbar sind.

2. Sattelfahrzeugkombination nach Anspruch 1,
**dadurch gekennzeichnet,**
**dass** sämtliche Module (2,8,9) komplett aneinanderschiebbar sind.

3. Sattelfahrzeugkombination nach Anspruch 1 und/oder 2,
**dadurch gekennzeichnet,**
**dass** wenigstens zwei rohr- oder kastenförmige Zentralträger (11,12) des zweiten (8) und des dritten (9) Moduls ganz oder teilweise in hierzu korrespondierende Zentralträger (10,11) des ersten (2) und zweiten (8) Moduls einschiebbar sind.

4. Sattelfahrzeugkombination nach Anspruch 1 und/oder einem der folgenden,
**dadurch gekennzeichnet,**
**dass** das erste, vordere Modul (2) einen als Rohr oder Kasten ausgebildeten Zentralträger (10) aufweist.

5. Sattelfahrzeugkombination nach Anspruch 1 und/oder einem der folgenden,
**dadurch gekennzeichnet,**
**dass** das zweite, mittlere Modul (8) einen in Fahrtrichtung gesehen nach vorn verlängerten kasten- oder rohrförmigen Zentralträger (11) aufweist, der in den Zentralträger (10) des ersten Moduls (2) ganz oder teilweise eingeschoben und hiermit verriegelt werden kann.

6. Sattelfahrzeugkombination nach Anspruch 1 und/oder einem der folgenden,
**dadurch gekennzeichnet,**
**dass** das dritte, hintere Modul (9) eine in Fahrtrichtung gesehen vorn fest angeschweißte Stange, Röhre oder einen fest angeformten Kasten (12) aufweist, der/die in die kasten- oder rohrförmigen Zentralträger (10,11) des ersten Moduls (2) und des zweiten Moduls (8) ganz oder teilweise eingeschoben und hiermit verriegelt werden kann.

7. Sattelfahrzeugkombination nach Anspruch 1 und/oder einem der folgenden,
**dadurch gekennzeichnet,**
**dass** jedes Modul (2,8,9) einen internen Radstand X-X von wenigstens 60" = 1.524 mm und drei Achsen aufweist, wobei die Gesamtzuglänge Z-Z inklusive Zugfahrzeug (13) maximal 1.080" = 27.432 mm beträgt.

8. Sattelfahrzeugkombination nach Anspruch 1 und/oder einem der folgenden,
**dadurch gekennzeichnet,**
**dass** der Radstand Y-Y zwischen den einzelnen Modulen (2,8,9) im teilweise ausgezogenen und verriegelten Zustand jeweils 192" = 4.876 mm beträgt.

9. Sattelfahrzeugkombination nach Anspruch 1 und/oder einem der folgenden,
**dadurch gekennzeichnet,**
**dass** die Module (2,8,9) maximal bis zur Länge ihrer rohr- und kastenförmigen Zentralträger (10,11,12) ausgezogen werden können.
